# EUROPEAN PATENT SPECIFICATION

(11) **EP 4 124 591 B1**
(45) Date of publication and mention of the grant of the patent: **10.12.2025**
(21) Application number: 22187575.0
(22) Date of filing: 28.07.2022
(51) Int. Cl.: B65G 1/04, B65D 85/18, B65G 1/133

(54) **A CLOTHES CONVEYOR WITH CARRIER ELEMENTS MOVABLY CONNECTED TO TRANSPORTATION MEMBERS**
KLEIDERBÜGEL MIT MIT TRANSPORTELEMENTEN BEWEGLICH VERBUNDENEN TRÄGERELEMENTEN
CONVOYEUR DE VÊTEMENTS AVEC DES ÉLÉMENTS DE SUPPORT RELIÉS DE MANIÈRE MOBILE À DES ÉLÉMENTS DE TRANSPORT

(30) Priority: 28.07.2021 NL 2028869
(43) Date of publication of application: 01.02.2023
(73) Proprietor: Van Remundt Beheer B.V., 2408 AP Alphen Aan Den Rijn (NL)
(72) Inventor: Van Remundt, Nicolaas Hyacinthus Maria, 2408 AP ALPHEN AAN DEN RIJN (NL)
(74) Representative: EP&C

(56) References cited:
- EP-B1- 1 163 174
- GB-A- 2 368 611
- KR-A- 20110 067 987
- US-A- 6 152 288

## Description

### FIELD OF THE INVENTION

The present invention relates to clothes conveyors for transporting, buffering and/or sorting clothing items hanging on clothes hangers. Such clothes conveyors are commonly used for sorting out clothing items after they have been washed in industrial laundries, but also in chemical laundries, for taking in and giving out company clothes, etc.

### BACKGROUND TO THE INVENTION

Clothes conveyors are known in a wide variety of embodiments.

For example, NL-9500506 of the present inventor already shows an automated sorting carousel that comprises an endless track formed by a hollow rail through which a chain is moveable. The hollow rail delimits a downwardly open longitudinal slot. The chain is guided slidably through the hollow rail. Hanging hooks are connected at regular spaced intervals to a lower side of the chain. The hanging hooks project downward from the chain through the slot. Each hanging hook is destined to have one clothes hanger hung to by means of its hook portion.

Before starting with a loading operation of the carousel, the chain with the empty hanging hooks is rotated until a magnet that is connected to a first one of the hanging hooks, passes a reed switch. A control unit then knows the position of the first hanging hook. The chain is then stopped with this first empty hanging hook in front of a loading station. A first clothes hanger with a clothing item is transported via an inlet sliding bar along a bar code reader to identify the item and then have it slide onto the first hanging hook. The control unit then assigns the identified bar code to the first hanging hook. Subsequently, the chain is moved one step, such that the second empty hanging hook is brought in front of the loading station. Thus all, hanging hooks besides the last twelve can be loaded. The last twelve need to remain empty due to space that is required for loading a new clothing item into the carousel. Instead of the loading taking place in an automated manner, it is also possible to load the carousel manually.

After being fully loaded in the stepwise manner, an automated sorting-out of the clothing items may start, during which the respective clothes hangers are released to an outlet sliding bar at an unloading station in a desired order according to a sorting algorithm that is programmed into the control unit. The carousel then each time switches between a low and high speed. Shortly before the control unit instructs an operable outlet device to transfer a specific clothes hanger from its hanging hook onto the outlet sliding bar, the speed is lowered, and, after the clothes hanger has indeed been sorted-out, is increased again.

The operable outlet device comprises two downwardly projecting spaced apart blocking pens that by means of an operable air cylinder can be moved up and down at both sides of the moving path of the hanging hooks. When moved down, the pens come to block the way of the hook portion of the first clothes hanger that is to be transported passed by the operable outlet device. The hanging hook itself is well able to pass by in between the pens. Owing to the special shape and backwards opening orientation of the hanging hooks, the blocked clothes hanger sees its hanging hook getting pulled away from underneath it, after which the clothes hanger drops down and arrives at the outlet sliding bar.

A drawback of this known sorting carousel is that it takes up a large amount of space and is consequently expensive to use. The maximum number of clothing items which can be stored per m2 is small. The hanging hooks have to be a relatively great distance from one another in order to enable clothes hangers bearing clothing items to be hung in the carousel and be removed therefrom. The distance between the hanging hooks has to be great in particular if the hanging hooks in front of and behind a hanging hook which is to be loaded are already occupied. Loading and unloading takes place along a straight section of the rail. For this purpose, an aisle needs to be provided along the straight rail section.

A further drawback is that clothing items may become jammed in the curved sections of the rail. To prevent this, the radius of curvature of the curved rail sections has to be relatively large. Together with the aisles this makes the device rather wide.

Yet another drawback is that it may sometimes occur that only one of the pens gets to block the way of the hook portion. This may for example happen when a clothing item is mainly born by one side of its clothes hanger and/or when a clothes hanger has come to hang oblique onto its hanging hook and/or when a relative small type of hook portion is used compared to the spacing between the pens. However, if only one of the pens gets to block the hook portion, then this immediately shall lead to the clothes hanger and the clothing item born by it, starting to turn. This may well lead to that clothes hanger not properly dropping down onto the outlet sliding bar, but accidentally getting hooked onto one of the neighbouring clothing items or dropping on the floor instead.

EP-1.163.174 also of the present inventor shows a garments storage device for storing and giving out garments which are hanging on clothes hangers. The device comprises an endless conveyor member, such as a chain, which can be driven along a guide track and to which bearing arms are attached. The bearing arms extend outwards. Those parts of the bearing arms which lie furthest outwards are each provided with a hook means for hanging a clothes hanger onto. The guide track comprises straight and curved track sections and is, for example, in the form of a loop. During a movement of the conveyor member along the guide track, the distances between the hook means which lie one behind the other are always automatically increased in the curved track sections and decreased in the straight track sections. In the straight track section, the bearing arms are substantially parallel to one another, while in the curved track section the outermost bearing-arm parts spread apart in the form of a fan. This advantageously allows the garments to be stored in a very compact arrangement in the straight track sections, while in the curved track sections there is automatically a large space available for loading and unloading. This allows optimum utilization of the floor area available. Since the loading and unloading takes place in the curved track sections, side aisles are no longer required. Furthermore, this makes it possible to load and/or unload the garments storage device both in batches and randomly.

A disadvantage hereof is that the loading and unloading are both foreseen to be done manually and require a full stop of the carousel for each new clothing item. This makes the loading and unloading time-consuming, energy-consuming and expensive. Furthermore, this limits the possible use of the storage device in combination with other types of conveyors, for example in more complex sorting installations, like when aiming to combine the storage device with automated inlet and outlet stations.

It is noted that WO-92/11954 already discloses circular sorting carousels with radially outwardly projecting arms that can be loaded and unloaded in an automated manner. For that an individually pneumatically operable carrier mechanism is provided at the end of each radially outwardly projecting arm on the carousel. Each pneumatically operable carrier mechanism is equipped with a set of pincers that can be forced to move between an open and closed position. In their closed position each set of pincers lies against each other and delimits a V-shaped groove inside which a hook portion of a clothes hanger can be hung. By operating the pincers to temporarily move away from each other towards their open position, the clothes hanger can be released to drop down onto either a sliding bar either a another set of pincers that lies waiting underneath it in a closed position.

A disadvantage here is that such pneumatically operable carrier mechanisms need to be provided at the end of each radially outwardly projecting arm on the carousel. This makes the carousel very expensive and vulnerable. Also the feeding and control of the individually pneumatically operable carrier mechanisms is rather complex and vulnerable, because feed and control signal lines need to extend along each arm and either be co-rotatable with the carousel either make use of dynamic contacts, connections, seals or the like.

Another disadvantage hereof is that this type of carousel requires a rather complex type of loading unit. This loading unit here also is foreseen to comprise such individually pneumatically operable carrier mechanisms, which then even need to be made slidable back and forth in radial and tangential directions, such that they are able to each time have a new clothes hanger hung onto them, actively move it towards the carousel, have the carousel position an empty set of pincers at the end of one of its arms underneath it, and then release the new clothes hanger to accurately drop down onto it such that it gets properly supported into the V-shaped groove that is delimited between its closed pincers.

KR-2011/0067987 shows a clothes conveyor according to the preamble of claim 1.

### BRIEF DESCRIPTION OF THE INVENTION

The present invention aims to overcome those disadvantages at least partly or to provide a usable alternative. In particular the present invention aims to provide a reliable clothes conveyor that takes up little space, while being able to transport, buffer and/or sort-out large numbers of clothing items, and while at a same time being able to at least unload the clothing items in an efficient automated manner.

According to the present invention this aim is achieved by a clothes conveyor configured for transporting/buffering/sorting clothes hanging on clothes hangers according to claim 1. The clothes conveyor comprising:
- an endless track;
- an endless conveyor member, that is guided along the track, and that is equipped with spaced apart transportation members that are configured to take along respective ones of the clothes hangers in a transportation direction along the track, each transportation member having a carrier element that is configured to hang a respective one of the clothes hangers with a hook portion onto;
- a drive unit for driving the conveyor member; and
- an outlet station,
wherein the outlet station comprises release means operable by a control unit for releasing a hook portion of a respective one of the clothes hangers from its carrier element.

Further, according to the invention, each carrier element is movably connected to its transportation member between a holding position for carrying its respective one of the clothes hangers, and a release position for releasing that clothes hanger,
wherein each carrier element comprises a hanging part with a support member and an operating part that are co-movable together relative to their transportation member between the holding and release positions,
   wherein the operable release means comprise a blocking element that is moveable into and out of a moving path of the operating parts along the track in order to block an operating part to co-move together with its hanging part from its holding position into its release position,
wherein the endless track of the conveyor is racetrack shaped and comprises pairs of opposing straight and convexly curved track sections,
wherein distances between successive points at which the carrier elements are attached to the endless conveyor member are such that there are always at least three carrier elements in a convexly curved track section,
wherein the transportation members comprise bearing arms which are attached to the conveyor member and extend sideways outwards from the conveyor member, outer bearing-arm parts being provided with the movably connected carrier elements, so that, during a movement of the conveyor member along the track, the distances between successive carrier elements each time increase in the convexly curved track sections and decrease in the straight track sections, and
wherein the outlet station connects to one of the convexly curved track sections.

Thus advantageously a reliable clothes conveyor is provided that is able to unload clothing items in an efficient automated manner, without requiring expensive and/or vulnerable pick and place mechanisms for that, and without requiring large numbers of individually pneumatically operable carrier mechanisms that need to move along with the conveyor member.

The blocking element of the operable release means at the location of the automated outlet station advantageously acts directly on the operating parts of the movably connected carrier element, and no longer on the clothes hanger itself. This makes the release independent on which type of clothes hanger is used and how this clothes hanger hangs onto the hanging part. Even when a clothing item is mainly born by one side of its clothes hanger and/or when a clothes hanger has come to hang oblique onto its hanging hook and/or when a relative small type of hook portion is used, this shall make no difference whatsoever on the releasing process. The precise position of the operating parts of the movably connected carrier elements shall always be exactly the same. Thus, the release can no longer lead to the clothes hanger and the clothing item born by it, starting to turn. This helps to guarantee that the clothes hanger upon release shall always drop down straight onto the outlet sliding bar, without getting to bump against one of the neighbouring clothing items or dropping on the floor instead.

For the automated unloading it is advantageously not necessary to bring the conveyor member to a full stop each time. In fact it is even deemed advantageous to have the conveyor member keep on moving at a relative high speed along the track during unloading, because then this relative high conveying speed is also given along with the dropping down clothing item, which aids in having it automatically move out of the way, for example by immediately starting to slide along the an outlet sliding bar or the like. This not only makes the automated unloading process quicker, but also helps to save time and money. Furthermore, this increases possibilities in combining the inventive clothes conveyor with other types of conveyors, for example in more complex sorting installations.

When forced to move into its release position, the hanging part is brought in such a position and/or orientation relative to its transportation member that it is no longer supporting the hook portion of the clothes hanger in the vertical downwards direction. In a preferred further embodiment, each movably connected carrier element can be hingedly connected around a hinge axis with its transportation member. Thus advantageously, the entire carrier element starts to rotate around its hinge axis when its operating part gets blocked while its transportation member keeps on moving in the transportation direction away from this blocked operating part. Due to this forced rotation, the hanging part of the carrier element gets pulled away from underneath the hook portion of the clothes hanger. The transportation member itself then may form a limitation in the transportation direction by which the hook portion of the clothes hanger is limited to get pulled along with the hanging part rotating out of the way.

With this both the operating part and the hanging part get to follow a curved track around the hinge axis. This helps to automatically force the operating part to gradually rotate out of the way that is blocked in the transportation direction by the blocking element, such that the operating part can pass along the blocking element as soon as the release position has been obtained and the clothes hanger has been released to drop down at the outlet station. Furthermore this helps to automatically force the hanging part to gradually rotate out of the way towards its release position in which it no longer carries the hook portion of the clothes hanger.

In addition thereto, each hinge axis may extend in a plane perpendicular to the transportation direction. Thus advantageously, the blocking force may initially get fully transferred into a rotation force for the carrier element to start rotating from out of its supporting position into its release position.

In addition thereto, the operating part and hanging part preferably may lie at opposing sides of the hinge axis. This creates an advantageous momentum force for rotating the hanging part towards its release position.

In addition thereto, each hinge axis may extend horizontally in a direction perpendicular to the transportation direction, while the operating part then may project upwards from the hinge axis, and the hanging part may extend downwards from the horizontal hinge axis. This advantageously makes it possible to equip the hanging part with a sliding support face for the hook portion of the clothes hanger that projects in the transportation direction, while at a same time extending at an oblique angle upwards in the holding position and having this oblique angle automatically reduced, preferably to at least horizontally and preferably to even oblique downwards, during its rotation towards the release position. Thus the clothes hanger with the clothing item hanging on it, do not first have to be moved upwards over the entire height of the angled sliding support face in order to be released, but instead can follow a tangential path around the hinge axis and remain hanging on substantially the same height while the sliding support surface of the hanging part turns away from underneath the hook portion of the clothes hanger.

In a preferred further or alternative embodiment, the support member extends forward or backward in the transportation direction, while also projecting movable through an opening in the transportation member between the holding position and the release position. Thus advantageously, the support member, for example a pin-shaped support member, can be pulled through the opening to entirely disappear out of the way where the hook portion of the clothes hanger finds itself, while at a same time pulling this hook portion of the clothes hanger to come to lie against the limitation surface of the transportation member.

In a preferred further or alternative embodiment, the hanging part may lie at a front side of the transportation member with the support member projecting backwards in the transportation direction through the opening in the transportation member to support the clothes hanger hung to it at a back side of the transportation member in the holding position. Thus advantageously, upon activation of the operable release means to block the operating part to co-move together with its hanging part from its holding position into its release position, the clothes hanger does not get pushed forward by the transportation member, but instead has full freedom to drop downwards as soon as it is fully released.

According to the invention, the endless track of the conveyor is racetrack shaped and comprises pairs of opposing straight and convexly curved track sections, wherein distances between successive points at which the carrier elements are attached to the endless conveyor member are such that there are always at least three carrier elements in a convexly curved track section, wherein the carrier elements comprise bearing arms which are attached to the conveyor member and extend sideways outwards from the conveyor member, outer bearing-arm parts being provided with the movably connected carrier elements, so that, during a movement of the conveyor member along the track, the distances between successive movably connected carrier elements each time case increase in the convexly curved track sections and decrease in the straight track sections, and wherein the outlet station connects to one of the convexly curved track sections.

This type of conveyor is particularly suitable to be equipped with the movably connected carrier elements at the outer ends of its bearing arms, because it would not have been possible to use an operable outlet device like the one as described in NL-9500506, since the innermost pen then inevitably would block the way of the bearing arms.

Thus, the invention now for the first time makes it possible to also have the type of clothes conveyor as disclosed in NL-9500506 provided with simple and reliable and individually fully mechanically operable carrier elements for automated release at the location of its outlet station. Thus the clothes conveyor advantageously combines a carefully but quickly buffering of large volumes of the fed clothing items, while also being able to carefully but quickly sort-out specific ones of those buffered clothing items onto the outlet station.

The sorting-out of the identified clothes hangers with clothing items then advantageously can be done in the convexly curved track section where there is more than enough space for the clothing item to be quickly and easily be transferred from between the spreading bearing arms of one of the support members of the movably connected carrier elements without being hindered whatsoever by clothing items that might still hang on neighbouring bearing arms.

In a preferred further or alternative embodiment, the outlet station may comprises a sliding rod that at least with a head end portion extends in the transportation direction. Thus advantageously, in the case of using the invention for the clothes conveyor of in NL-9500506, the outlet sliding bar can be positioned in the convexly curved track section where, due to each time automatically obtained spreading effect there is more than enough space for the clothing item to quickly and easily drop down from its support member onto the head end portion of the sliding rod as soon as this support member is forced to move out of the way when its carrier element is blocked to move to its release position, without being hindered whatsoever by clothing items that might still hang on neighbouring bearing arms. Due to the tangential orientation of the head end portion of the sliding bar in the convexly curved track section, the clothing item then also is automatically given along substantially the initial conveying speed of the clothes conveyor at the time of release. Thus, the clothing item is well able to swiftly slide out of the way of any trailing clothing items on the clothing conveyor along the outlet sliding bar.

The clothes conveyor preferably may comprise a control unit that is configured to assign identified clothes hangers to the individual hanger positions. The control unit then furthermore can be configured to control the clothes conveyor to sort-out respective ones of the identified clothes hangers from their assigned individual inlet hanger positions according to sorting criteria by means of suitable operation of the operable release means to move the blocking element into and out of the moving path of the operating parts along the track in order to block an operating part of that hanger position to which a to-be-sorted-out clothing item hangs, and force it to co-move together with its hanging part from its holding position into its release position in order to have the to-be-sorted-out clothing item drop down.

The control unit thus may perform an automated sorting-out of the clothing items, during which the respective clothes hangers are released at the outlet station, for example on a sliding bar, in a desired order according to a sorting algorithm that is programmed into the control unit. The clothes conveyor then keeps on conveying, and if necessary each time may switch between a low and high speed. Shortly before the control unit instructs an operable outlet device to release a specific clothes hanger from its hanging part hook, onto said for example outlet sliding bar, the speed then can be lowered, and, after the clothes hanger has indeed been sorted-out, can be increased again.

Further preferred embodiments of the invention are stated in the dependent subclaims.

### DETAILED DESCRIPTION OF THE DRAWINGS

The invention shall now be explained in more detail below by means of describing some exemplary embodiments in a non-limiting way with reference to the accompanying drawings, in which:
- Fig. 1 shows a plan view of an embodiment of a clothes conveyor according to the invention without clothing items hung in it;
- Fig. 2 shows a cross-sectional view, on line II-II in fig. 1, with clothing items hung from the conveyor;
- Fig. 3 shows a perspective view of the device from fig. 1, the bearing arms in the straight track sections being indicated only diagrammatically by dashed lines;
- Fig. 4 shows an enlarged partial view of a back side of one of the bearing arms in fig. 1-3;
- Fig. 5 shows an enlarged partial view of a front side of one of the bearing arms in fig. 1-3;
- Fig. 6 shows a further enlarged side view of fig. 4 with the carrier element hinged closed in its holding position;
- Fig. 7 shows the further enlarged side view of fig. 4 with the carrier element blocked and hinged open towards its release position; and
- Fig. 8 shows a variant embodiment of the clothes conveyor in combination with an inlet feeding conveyor at an inlet side and an outlet transportation conveyor at an outlet side.

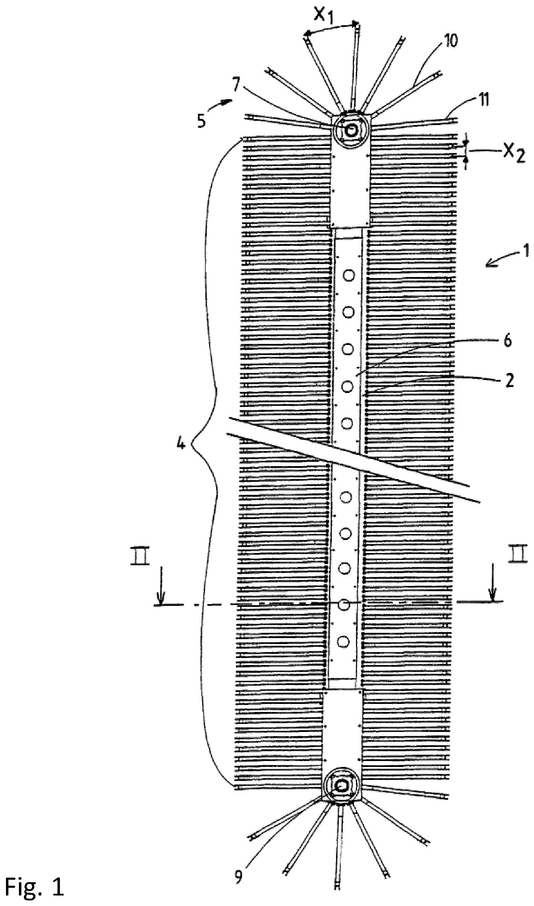

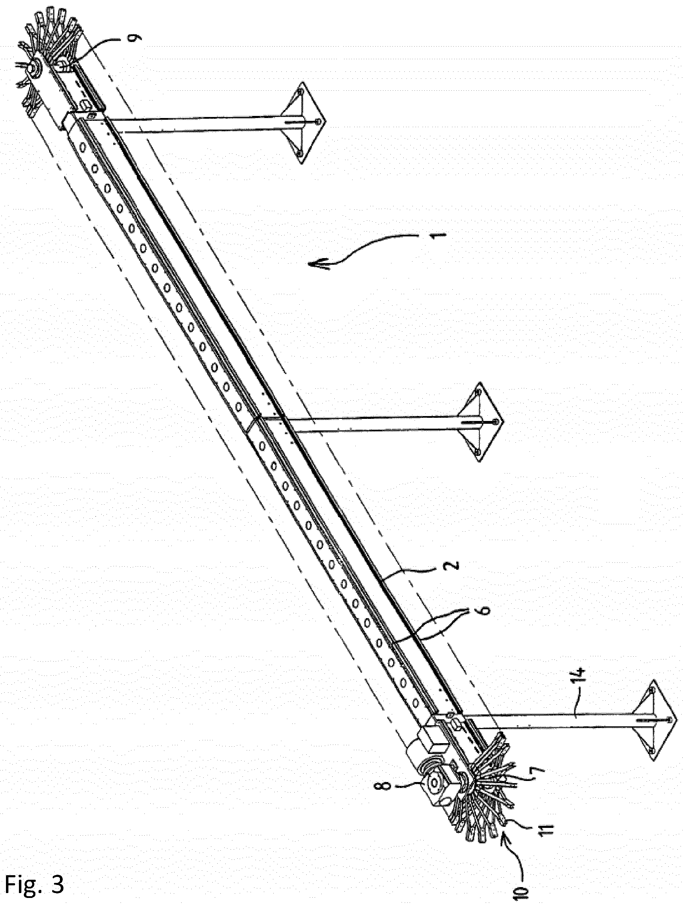

The clothes conveyor in figs. 1-3 comprises a carousel 1. The carousel 1 may be positioned either on legs or in a suspended position. The carousel 1 comprises an endless conveyor member 2 which is guided around an elongate loop track. The track has two straight track sections 4 and two curved track sections 5. The straight track sections 4 are delimited by profile sections 6 which are open on one side and provided, for example, with a wear-resistant plastic layer in which the conveyor member 2 is supported.

Other supports and/or guides are also possible, for example guide wheels. At one end, the conveyor member 2 is driven by a drive wheel 7 which is connected to a switch cabinet 8. At the other end, the conveyor member 2 is guided over a running wheel 9. The wheels 7, 9 delimit the curved track sections 5 and keep the conveyor member 2 taut.

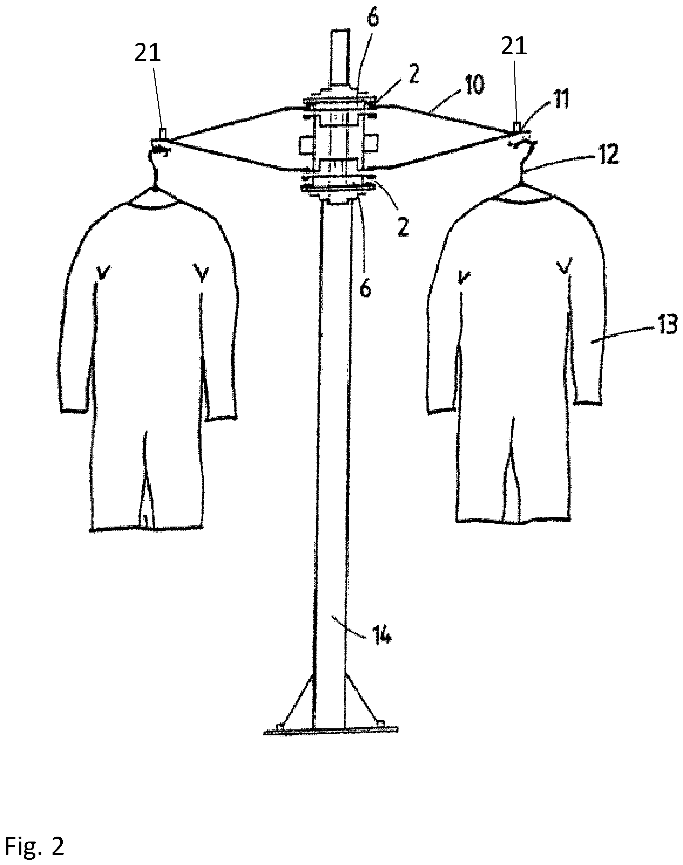

A large number of transportation members 10 are attached to the conveyor member 2. The transportation members 10 comprise bearing arms 10' that extend outwards from the conveyor member 2. Those parts of the bearing arms 10' which lie furthest outwards are provided with carrier elements 11 for clothes hangers 12 bearing clothing items 13 (cf. fig. 2) to be hung from. The length of the bearing arms 10' is such that the clothing item 13 cannot come into contact with the support frame 14. More particularly, the length of the bearing arms 10' is greater than half the width of the clothing items 13 which are to be hung from them.

The distance between two successive movably connected carrier elements 11 is not constant, but rather increases and decreases as the conveyor member 2 moves along the track. As can be seen clearly from fig. 1, the distance x1 between carrier elements 11 in the curved track section 5 is greater than the distance x2 between carrier elements 11 in the straight track section 4. More particularly, x1 is at least double x2. This ensures, in a simple manner, that the clothing items 13 in the curved track sections 5 always automatically hang with a larger space between them, making them easier to gain access to, in particular for the purpose of automated loading and unloading the carousel 1.

In the embodiment shown in fig. 2, the carousel 1 comprises two endless conveyor members 2 which are arranged one below the other and are driven synchronously by the drive wheel 7. Each bearing arm 10' is designed in the form of a V-shaped fork and is supported on both conveyor members 2. This forked design of the bearing arm 10' provides considerable stability and makes it easy to absorb the moment which is exerted on the bearing arm 10' by the weight of the clothing item 13. The bearing arm 10' may also be of any other desired form.

The conveyor members 2 are in this case formed by chains. Drive belts and the like may also be used. The use of chains has the advantage that the length of the conveyor can easily be adjusted as desired, by varying the number of links. It is also possible to replace the chain with a chain having larger or smaller links. In this way, the conveyor can easily be adapted to the size or number of clothing items 13 which is to be attached to the bearing arms 10'. The bearing arms 10' are, for example, attached around the other link on the conveyor member 2.

The clothes conveyor is advantageously used for buffering and sorting out clothing items one by one in a controlled manner.

According to the invention the carrier elements 11 are movably connected to the free outer parts 10" of the bearing arms 10', such that they are advantageously suitable for automatic unloading. The means for automatic unloading can easily be arranged in the curved track sections, since there is always sufficient free space between the carrier elements 11 in those areas. The spaces which become available in the curved track sections are advantageously sufficiently large to ensure that unloading can take place automatically even if the positions in front of and behind the bearing-arm position to be unloaded are still occupied. As a result, the device can also be unloaded randomly, making the device eminently suitable for sorting functions. The device can also be used for a plurality of clients simultaneously. Each client can remove a desired number of clothing items from the carousel, after which new items can be added, without the entire carousel having to run until it is emptied, and/or after which a subsequent client order can be sorted.

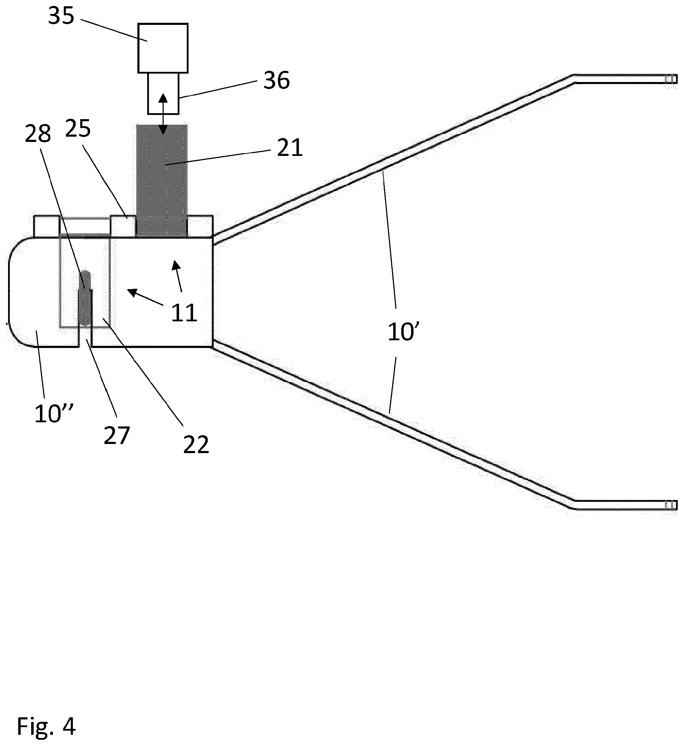

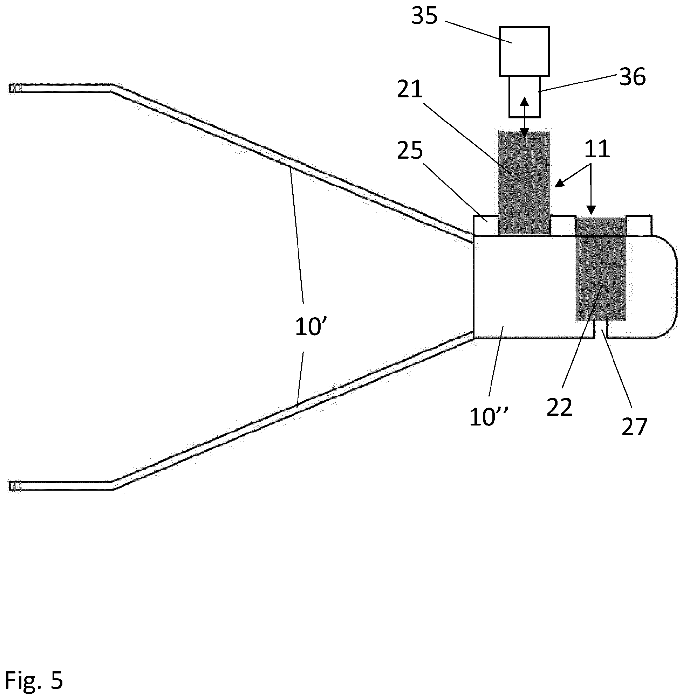

In fig. 4-7 it can be seen that each carrier element 11 comprises a horizontal hinge axis 20 that is fixedly connected with a plate-shaped upwardly projecting operating part 21 and with a plate-shaped downwardly projecting hanging part 22. With this the upwardly projecting operating part 21 lies sideways inwards, whereas the downwardly projecting hanging part 22 lies sideways outwards.

The outer part 10" of the bearing arms 10' is plate-shaped and at its upper edge side is provided with three semi-cylindrical housing parts 25 into which center and free end sections of the hinge axis 20 of the carrier element 11 can be clicked. With that the hinge axis 20 lies perpendicular to the transportation direction TD of the conveyor member.

The operating part 21 extends freely above the plate-shaped outer part 10", whereas the hanging part 22 lies with its backside against a front side of the plate-shaped outer part 10".

The plate-shaped outer part 10" is provided with a throughgoing downwardly open slit-shaped opening 27. The downwardly projecting hanging part 22 at its backside is fixedly connected with a pin-shaped support member 28 that projects through the opening 27 and from there extends further obliquely angled upwards in a direction that is opposite to the foreseen transportation direction TD of the conveyor member during unloading.

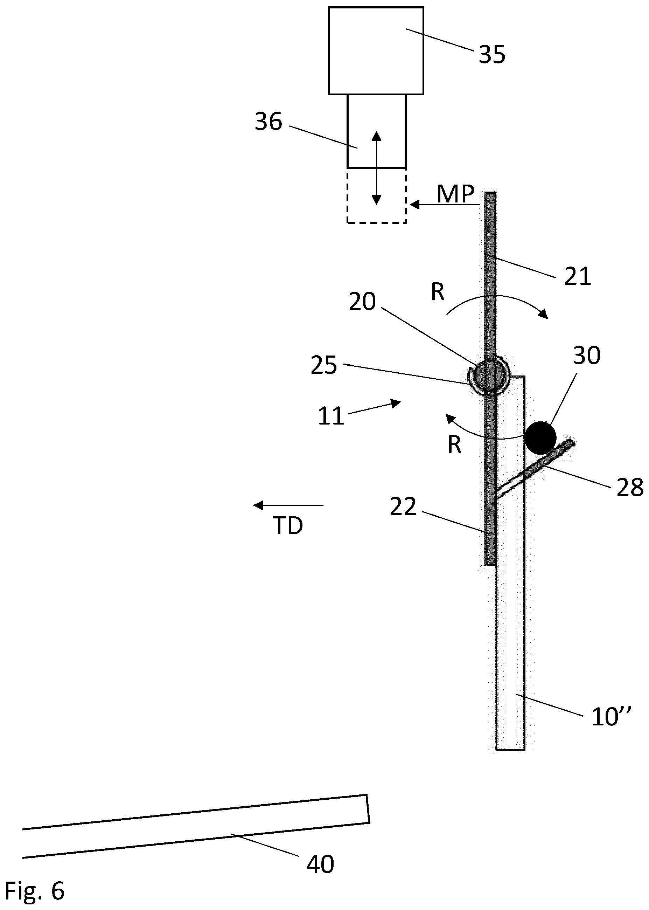

In fig. 6 it is shown that a hook portion 30 of a clothes hanger is hung onto the support member 28.

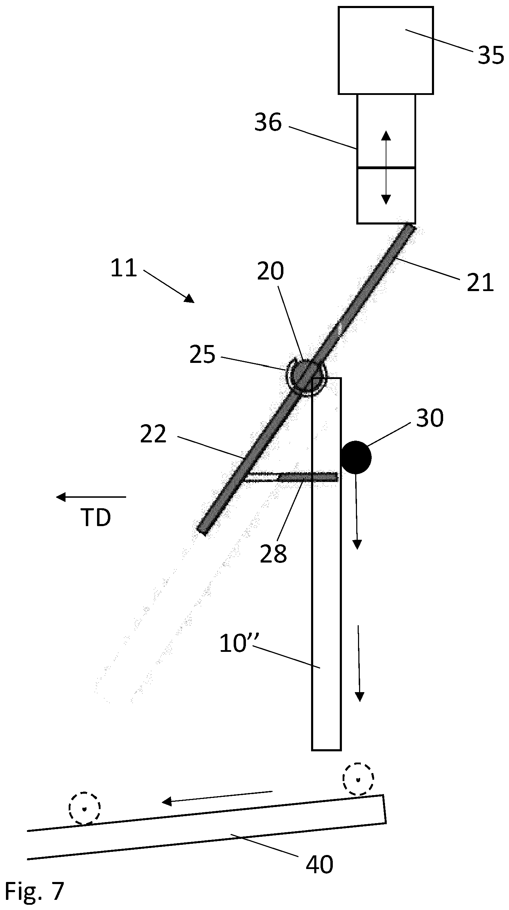

The entire carrier element 11 is thus rotatable relative to its transportation member 10 between a holding position for carrying a clothes hangers, as shown in fig. 6, and a release position for releasing that clothes hanger, as is shown in fig. 7. This rotatability is indicated with the arrows R.

Operable release means 35, here formed by an electromagnetically or pneumatically operable cylinder, comprise a blocking element 36 that is moveable into and out of a moving path MP of the operating parts 21 along the track in order to block one or more of the operating parts 21 whenever this is desired.

When the release means 35 are indeed operated, and have placed the blocking element 36 downwards in the moving path MP, then as soon as the operating part 21 bumps against it, it shall be forced to co-rotate around its hinge axis 20 together with the rest of the carrier element 11 from its holding position into its release position.

Due to this, the pin-shaped support member 28 shall be pulled away from underneath the hook portion 30 of the clothes hanger. During this pulling away, the hook portion 30 shall be limited by a backside of the plate-shaped outer part 10" of the bearing arm 10' until it has gained full freedom to drop down onto an outlet sliding bar 40, and there start sliding gradually downwards.

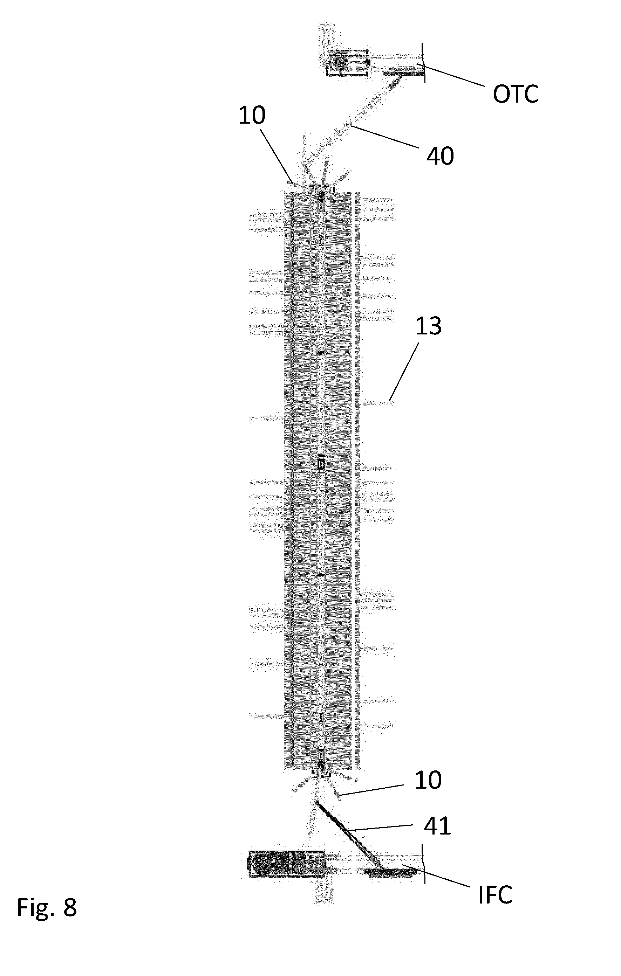

In fig. 8 the clothes conveyor is shown in combination with an inlet feeding conveyor IFC (only an end part of which is schematically shown) at an inlet side and an outlet transportation conveyor OTC (only a beginning part of which is schematically shown) at an outlet side. An inlet sliding bar 41 is provided in between the inlet feeding conveyor IFC and a first one of the curved track sections. The outlet sliding bar 40 is provided in between the outlet transportation conveyor OTC and a second one of the curved track sections. It can be seen here that both the inlet sliding bar 41 as well as the outlet sliding bar 40 substantially extend in the tangential direction, such that the tangentially directed conveying speed a clothing item 13 has in the curved track sections is given along with it upon release in the curved track section at the outlet side. This gives the clothing item 13 a head start in starting to slide over the outlet sliding bar 40.

Besides the shown and described embodiments, numerous variants are possible. For example the dimensions and shapes of the various parts can be altered. Also it is possible to make combinations between advantageous aspects of the shown embodiments. Instead of using hinged connections between the carrier elements and the transportation members, it is also possible to provide for translational movable connections between them. In that case the support member shall project forward in the transportation direction and be pulled from underneath the hook portion in a backward direction. Important then though is to make the translational movement such that then also the operating part gets moved out of the blocked way when translated to its release position. In the case of a hinge connection, it is also possible to have the operating part and hanging part lie at a same side of the hinge axis. In that case, the support member shall also project forward in the transportation direction and be pulled from underneath the hook portion in a backward direction. Furthermore it is noted that the operating part may also be orientated to project in other directions outside the circumference of the transportation member it is movably connected to, for example sideways or downwards.

After being forced to move to its release position, the carrier element may automatically take back its holding position due to gravitational forces. For that a counterweight can be provided. In the alternative it is also possible to place a spring between the transportation member and the movably connected carrier element. All kinds of materials can be used for the carrier element, like metal and plastic.

It is noted that the movably connected carrier elements may also be provided in combination with other kinds of transportation members that are guided along a track of a clothes conveyor.

It should be understood that various changes and modifications to the presently preferred embodiments can be made without departing from the scope of the invention, as set forth in the appended claims. and therefore will be apparent to those skilled in the art.

## Claims

1. A clothes conveyor (1) configured for transporting/buffering/sorting clothes (13) hanging on clothes hangers, comprising:
• an endless track;
• an endless conveyor member (2), that is guided along the track, and that is equipped with spaced apart transportation members (10) that are configured to take along respective ones of the clothes hangers in a transportation direction (TD) along the track, each transportation member (10) having a carrier element (11) that is configured to hang a respective one of the clothes hangers with a hook portion (30) onto;
• a drive unit (8) for driving the conveyor member (2); and
• an outlet station,
wherein the outlet station comprises release means (35) operable for releasing the hook portion (30) of a respective one of the clothes hangers from its carrier element (11),
wherein each carrier element (11) is movably connected to its transportation member (10) between a holding position for carrying its respective one of the clothes hangers, and a release position for releasing that clothes hanger,
wherein each carrier element (11) comprises a hanging part (22) with a support member (28) and an operating part (21) that are co-movable together relative to their transportation member (10) between the holding and release positions, and
wherein the operable release means (35) comprise a blocking element (36) that is moveable into and out of a moving path (MP) of the operating parts (21) along the track in order to block an operating part (21) and force it to co-move together with its hanging part (22) from its holding position into its release position,
**characterized in that,**
the endless track of the conveyor (1) is racetrack-shaped and comprises pairs of opposing straight and convexly curved track sections (4, 5),
wherein distances between successive points at which the carrier elements (11) are attached to the endless conveyor member (2) are such that there are always at least three carrier elements (11) in a convexly curved track section (5),
wherein the transportation members (10) comprise bearing arms (10') which are attached to the conveyor member (2) and extend sideways outwards from the conveyor member (2), outer bearing-arm parts (10") being provided with the movably connected carrier elements (11), so that, during a movement of the conveyor member (2) along the track, the distances between successive carrier elements (11) each time increase in the convexly curved track sections (5) and decrease in the straight track sections (4), and
wherein the outlet station connects to one of the convexly curved track sections (5).

2. A clothes conveyor according to claim 1, wherein each movably connected carrier element (11) is hingedly connected around a hinge axis (20) with its transportation member (10).

3. A clothes conveyor according to claim 2, wherein each hinge axis (20) extends in a plane perpendicular to the transportation direction (TD).

4. A clothes conveyor according to claim 3, wherein each hinge axis (20) extends horizontally in a direction perpendicular to the transportation direction (TD).

5. A clothes conveyor according to one of the preceding claims 2-4, wherein the operating part (21) and hanging part (22) lie at opposing sides of the hinge axis (20).

6. A clothes conveyor according to claim 5, wherein the operating part (21) projects upwards from the hinge axis (20), and the hanging part (22) extends downwards from the hinge axis (20).

7. A clothes conveyor according to one of the preceding claims, wherein the support member (28) extends forward or backward in the transportation direction (TD), while also projecting movable through an opening (27) in the transportation member (10) between the holding position and the release position.

8. A clothes conveyor according to claims 7, wherein the hanging part (22) lies at a front side of the transportation member (10) with the support member (28) projecting backwards in the transportation direction (TD) through the opening (27) in the transportation member (10) to support the clothes hanger hung to it at a back side of the transportation member (10) in the holding position.

9. A clothes conveyor according to one of the preceding claims, wherein the outlet station comprises a sliding rod (40) that at least with a head end portion extends in the transportation direction (TD).

## Patentansprüche

1. Kleidungsförderer (1), der zum Transportieren/Speichern/Sortieren von auf Kleiderbügeln hängender Kleidung (13) ausgestaltet ist, umfassend:
• eine Endlosbahn,
• ein endloses Förderglied (2), das entlang der Bahn geführt ist und das mit beabstandeten Transportgliedern (10) ausgestattet ist, die dazu ausgestaltet sind, jeweilige der Kleiderbügel in einer Transportrichtung (TD) entlang der Bahn mitzunehmen, wobei jedes Transportglied (10) ein Trägerelement (11) aufweist, das dazu ausgestaltet ist, dass ein jeweiliger der Kleiderbügel mit einem Hakenabschnitt (30) daran gehängt wird,
• eine Antriebseinheit (8) zum Antreiben des Förderglieds (2) und
• eine Ausgabestation,
wobei die Ausgabestation Freigabemittel (35) umfasst, die zum Freigeben des Hakenabschnitts (30) eines jeweiligen der Kleiderbügel von seinem Trägerelement (11) betreibbar sind,
wobei jedes Trägerelement (11) zwischen einer Halteposition zum Tragen seines jeweiligen der Kleiderbügel und einer Freigabeposition zum Freigeben dieses Kleiderbügels beweglich mit seinem Transportglied (10) verbunden ist,
wobei jedes Trägerelement (11) ein Hängeteil (22) mit einem Stützglied (28) und ein Betriebsteil (21) umfasst, die zusammen bezüglich ihres Transportglieds (10) zwischen der Halte- und der Freigabeposition bewegbar sind, und
wobei die betätigbaren Freigabemittel (35) ein Blockierelement (36) umfassen, das entlang der Bahn in einen Bewegungspfad (MP) der Betriebsteile (21) hinein und aus diesem heraus bewegbar ist, um ein Betriebsteil (21) zu blockieren und es zu zwingen, sich zusammen mit seinem Hängeteil (22) aus seiner Halteposition in seine Freigabeposition zu bewegen,
**dadurch gekennzeichnet, dass**
die Endlosbahn des Förderers (1) rennbahnförmig ist und Paare gegenüberliegender gerader und konvex gekrümmter Bahnabschnitte (4, 5) umfasst,
wobei Abstände zwischen aufeinanderfolgenden Punkten, an denen die Trägerelemente (11) an dem endlosen Förderglied (2) angebracht sind, derart sind, dass immer mindestens drei Trägerelemente (11) in einem konvex gekrümmten Bahnabschnitt (5) vorliegen,
wobei die Transportglieder (10) Lagerarme (10') umfassen, die an dem Förderglied (2) angebracht sind und sich von dem Förderglied (2) seitlich nach außen erstrecken, wobei äußere Lagerarmteile (10") mit den beweglich verbundenen Trägerelementen (11) versehen sind, so dass die Abstände zwischen aufeinanderfolgenden Trägerelementen (11) bei einer Bewegung des Förderglieds (2) entlang der Bahn in den konvex gekrümmten Bahnabschnitten (5) jedes Mal zunehmen und in den geraden Bahnabschnitten (4) jedes Mal abnehmen, und
wobei die Ausgabestation mit einem der konvex gekrümmten Bahnabschnitte (5) verbunden ist.

2. Kleidungsförderer nach Anspruch 1, wobei jedes beweglich verbundene Trägerelement (11) um eine Scharnierachse (20) mit seinem Transportglied (10) gelenkig verbunden ist.

3. Kleidungsförderer nach Anspruch 2, wobei sich jede Scharnierachse (20) in einer senkrecht zu der Transportrichtung (TD) verlaufenden Ebene erstreckt.

4. Kleidungsförderer nach Anspruch 3, wobei sich jede Scharnierachse (20) horizontal in einer senkrecht zu der Transportrichtung (TD) verlaufenden Ebene erstreckt.

5. Kleidungsförderer nach einem der vorhergehenden Ansprüche 2 - 4, wobei das Betriebsteil (21) und das Hängeteil (22) an gegenüberliegenden Seiten der Scharnierachse (20) liegen.

6. Kleidungsförderer nach Anspruch 5, wobei das Betriebsteil (21) von der Scharnierachse (20) nach oben vorsteht und sich das Hängeteil (22) von der Scharnierachse (20) nach unten erstreckt.

7. Kleidungsförderer nach einem der vorhergehenden Ansprüche, wobei sich das Stützglied (28) in der Transportrichtung (TD) nach vorne oder hinten erstreckt, während es auch durch eine Öffnung (27) in dem Transportglied (10) zwischen der Halteposition und der Freigabeposition bewegbar vorsteht.

8. Kleidungsförderer nach Anspruch 7, wobei das Hängeteil (22) an einer Vorderseite des Transportglieds (10) liegt, wobei das Stützglied (28) in der Transportrichtung (TD) durch die Öffnung (27) in dem Transportglied (10) nach hinten vorsteht, um den Kleiderbügel, der an einer Rückseite des Transportglieds (10) in der Halteposition an ihm aufgehängt ist, zu stützen.

9. Kleidungsförderer nach einem der vorhergehenden Ansprüche, wobei die Ausgabestation eine Gleitstange (40) umfasst, die sich zumindest mit einem Kopfendabschnitt in der Transportrichtung (TD) erstreckt.

## Revendications

1. Transporteur de vêtements (1) configuré pour transporter/stocker temporairement/trier des vêtements (13) suspendus sur des cintres, comprenant :
• un circuit en boucle ;
• un élément transporteur sans fin (2), qui est guidé le long du circuit, et qui est équipé d'éléments de transport (10) espacés qui sont configurés pour acheminer des cintres respectifs parmi les cintres dans une direction de transport (TD) le long du circuit, chaque élément de transport (10) ayant un élément porteur (11) configuré pour l'accrochage sur celui-ci d'un cintre respectif parmi les cintres avec une partie crochet (30) ;
• une unité d'entraînement (8) pour entraîner l'élément transporteur (2) ; et
• un poste de sortie,
le poste de sortie comprenant des moyens de libération (35) actionnables pour libérer de son élément porteur (11) la partie crochet (30) d'un cintre respectif parmi les cintres,
chaque élément porteur (11) étant relié de manière mobile à son élément de transport (10) entre une position de maintien pour porter son cintre respectif parmi les cintres, et une position de libération pour libérer ce cintre,
chaque élément porteur (11) comprenant une partie de suspension (22) avec un élément de support (28) et une partie de manœuvre (21) qui sont mobiles conjointement par rapport à leur élément de transport (10) entre les positions de maintien et de libération, et
les moyens de libération (35) actionnables comprenant un élément de blocage (36) qui est mobile de façon à se placer sur et hors d'un parcours de déplacement (MP) des parties de manœuvre (21) le long du circuit afin de bloquer une partie de manœuvre (21) et de la forcer à se déplacer conjointement avec sa partie de suspension (22) de sa position de maintien à sa position de libération,
**caractérisé en ce que**
le circuit en boucle du transporteur (1) est en forme de piste de course et comprend des paires de sections de circuit opposées droites et à courbure convexe (4, 5),
les distances entre les points successifs auxquels les éléments porteurs (11) sont fixés à l'élément transporteur sans fin (2) étant telles qu'il y a toujours au moins trois éléments porteurs (11) dans une section de circuit à courbure convexe (5),
les éléments de transport (10) comprenant des bras porteurs (10') qui sont fixés à l'élément transporteur (2) et s'étendent latéralement vers l'extérieur à partir de l'élément transporteur (2), des parties de bras porteurs externes (10") étant pourvues des éléments porteurs (11) reliés de manière mobile, de sorte que, pendant un mouvement de l'élément transporteur (2) le long du circuit, les distances entre les éléments porteurs (11) successifs augmentent à chaque fois dans les sections de circuit à courbure convexe (5) et diminuent dans les sections droites de circuit (4), et
le poste de sortie se raccordant à l'une des sections de circuit à courbure convexe (5).

2. Transporteur de vêtements selon la revendication 1, dans lequel chaque élément porteur (11) relié de manière mobile est relié de manière articulée autour d'un axe d'articulation (20) avec son élément de transport (10).

3. Transporteur de vêtements selon la revendication 2, dans lequel chaque axe d'articulation (20) s'étend dans un plan perpendiculaire à la direction de transport (TD).

4. Transporteur de vêtements selon la revendication 3, dans lequel chaque axe d'articulation (20) s'étend horizontalement dans une direction perpendiculaire à la direction de transport (TD).

5. Transporteur de vêtements selon l'une des revendications précédentes 2 à 4, dans lequel la partie de manœuvre (21) et la partie de suspension (22) se trouvent sur des côtés opposés de l'axe d'articulation (20).

6. Transporteur de vêtements selon la revendication 5, dans lequel la partie de manœuvre (21) fait saillie vers le haut à partir de l'axe d'articulation (20), et la partie de suspension (22) s'étend vers le bas à partir de l'axe d'articulation (20).

7. Transporteur de vêtements selon l'une des revendications précédentes, dans lequel l'élément de support (28) s'étend vers l'avant ou vers l'arrière dans la direction de transport (TD), tout en faisant également saillie de manière mobile à travers une ouverture (27) dans l'élément de transport (10) entre la position de maintien et la position de libération.

8. Transporteur de vêtements selon la revendication 7, dans lequel la partie de suspension (22) se trouve sur un côté avant de l'élément de transport (10), l'élément de support (28) faisant saillie vers l'arrière dans la direction de transport (TD) à travers l'ouverture (27) dans l'élément de transport (10) pour supporter le cintre suspendu à celui-ci au niveau d'un côté arrière de l'élément de transport (10) dans la position de maintien.

9. Transporteur de vêtements selon l'une des revendications précédentes, dans lequel le poste de sortie comprend une tige de coulissement (40) qui s'étend dans la direction de transport (TD) au moins avec une partie d'extrémité de tête.
